# EUROPEAN PATENT SPECIFICATION

(11) **EP 1 833 271 B1**
(45) Date of publication and mention of the grant of the patent: **20.10.2010**
(21) Application number: 06761538.5
(22) Date of filing: 21.07.2006
(51) Int. Cl.: G06F 1/24, H04W 88/04

(54) **A METHOD FOR CASCADE COMMUNICATION DEVICE RESETTING**
VERFAHREN ZUR RÜCKSETZUNG EINER KASKADENKOMMUNIKATIONSVORRICHTUNG
MÉTHODE DE RÉINITIALISATION D UN DISPOSITIF DE COMMUNICATION EN CASCADE

(30) Priority: 21.07.2005 CN 200510085144
(43) Date of publication of application: 12.09.2007
(73) Proprietor: Huawei Technologies Co., Ltd., Longgang District, Shenzhen Guangdong 518129 (CN)
(72) Inventor: YU, Ming Huawei Administration Building Bantian, Shenzhen Guangdong 518129 (CN)
(74) Representative: Körber, Martin Hans
(86) International application number: PCT/CN2006/001803
(87) International publication number: WO 2007/009394

(56) References cited:
- EP-A- 0 426 366
- CN-A- 1 437 111
- CN-A- 1 665 154
- JP-A- 9 319 467
- JP-A- 09 319 467
- US-A- 5 086 505
- US-A- 5 724 599
- US-A- 5 724 599

## Description

### Field of the Technology

The present invention relates to radio base station systems, and more particularly, to method and apparatus for resetting a concatenated communication device.

### Background of the Invention

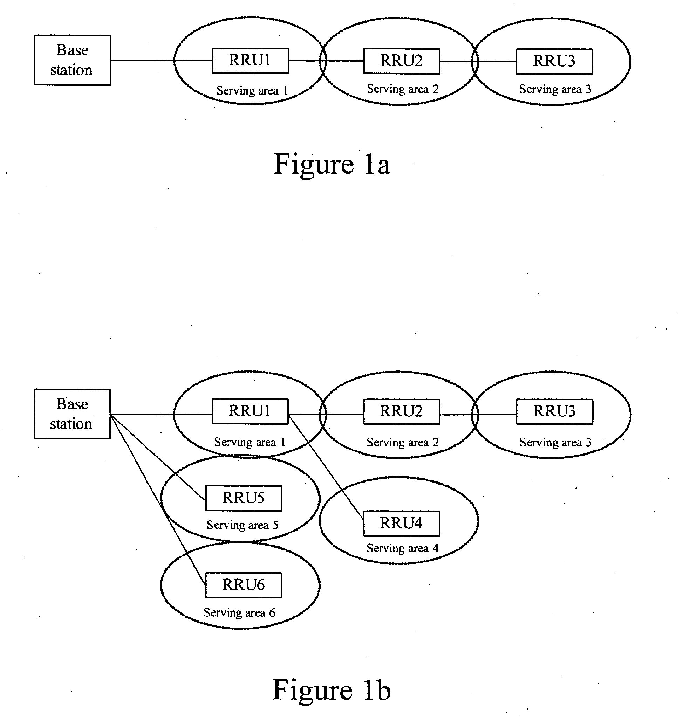

In a radio communication network, a radio base station system may be implemented by a base station with a radio-frequency module inside the base station, or be implemented by the base station and the radio-frequency module separated with each other, i.e., a distributed base station. For a distributed base station, the separated radio-frequency module is referred to as a Radio Remote Unit (RRU). The separated base station and the RRU(s) may construct different types of networks, such as a star network, a chain network and a tree network. A base station or an RRU may cover a certain area and provide services to subscribers in the area. The concatenated RRUs are connected through their respective transmission module to communicate with the base station. Fig. 1a shows a schematic diagram illustrating a chain networking architecture of the base station and the RRUs. As shown in Fig. 1a, the base station and the RRUs construct a chain network. As to RRU1, RRU2 and RRU3 are downstream units of the RRU 1 and the base station is an upstream unit of the RRU1. Fig.1b shows a schematic diagram illustrating a tree networking architecture of the base station and the RRUs. As shown in Fig.1b, the base station and the RRUs construct a tree network. As to the RRU1, the RRU2, RRU3 and RRU4 are downstream units of the RRU1 and the base station is the upstream unit of the RRU1. The RRU1∼RRU3 are referred to as concatenated communication devices. The concatenated communication devices may also be concatenated base stations.

In the above chain or tree networking architecture of the base station and the RRUs, supposing that the RRU2 is reset, then the RRU2 cannot provide services during a start-up period. Thus, the RRU3 on the downstream is forced to stop providing services due to the interruption of the communication of the RRU2. Accordingly, the service ability of the whole system will be affected. Moreover, if the serving area of the RRU3 on the downstream is an important area, the inability of providing services brings large amount of complaints and decrease the confidence of subscribers to the network.

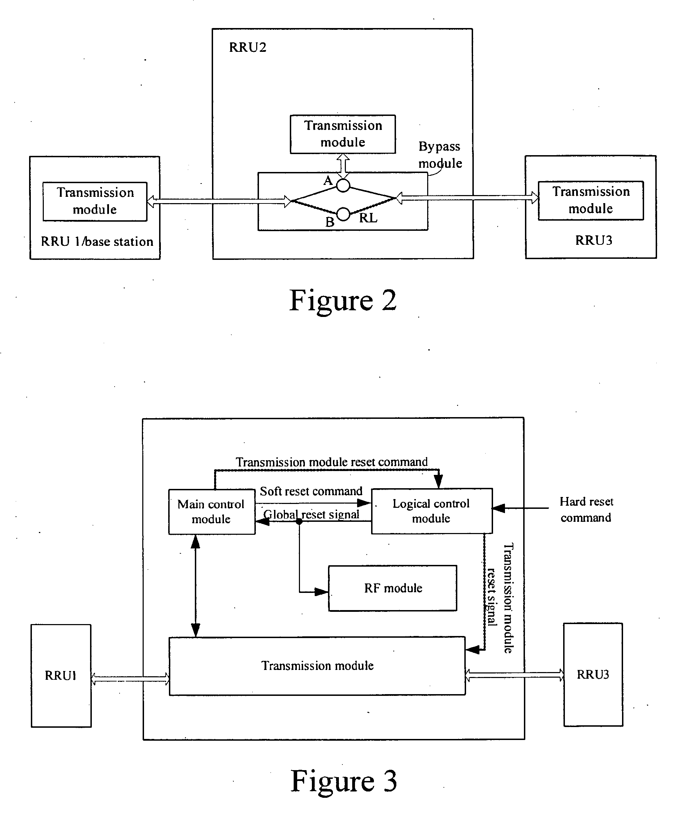

At present, the reset of the RRU is implemented by a bypass scheme which usually involves a relay. Fig.2 shows a schematic diagram of a circuit for resetting an RRU according to the related art. As shown in Fig.2, the RRUs are connected with each other through their respective transmission module to implement communication. Under normal conditions, the relay RL connects the transmission modules of RRU1/base station, RRU2 and RRU3 through contact A. When the RRU2 is reset, the relay RL establishes a physical connection between the RRU1/base station on the upstream and the RRU3 on the downstream through contact B, so as to guarantee the communication between the RRU3 and the RRU1/base station, thereby guarantee the normal operation of the RRUs on the downstream. It should be noted that the bypass scheme is also applicable to other concatenated devices.

However, the bypass scheme is implemented by adding additional hardware to the RRU, which increases the cost of the RRU and decreases the reliability of the system on the other hand. Moreover, the relay is valid only when a cable interface is adopted between the transmission modules of the RRUs but is not valid in case that an optical fibre interface is adopted.

EP 0 426 366 A2 discloses a method for resetting a concatenated communication device in a communication network. Further, US 5,086,505 concerns an electronic system having a plurality of resettable module, such as memories and input/output circuits wherein the modules are selectively, individually resettable. Moreover, another multiprocessor system comprising a reset control circuit is known from US 5,724,599.

### Summary of the Invention

Embodiments of the present invention provide a method an apparatus and a communications system for resetting a concatenated communication device to reduce cost and improve a reliability of the concatenated communication device.

According to one embodiment of the present invention, the method for resetting a concatenated communication device in a communication network includes:
determining, by a logical control module in the concatenated communication device, the type of a reset command in response to receiving the reset command;
resetting, by the logical control module, modules in the concatenated communication device according to the determined type of the reset command; and
wherein the resetting the modules comprises:
   resetting the modules except for a transmission module of the concatenated communication device in response to the determined type of the reset command being a global reset command; and
   resetting the transmission module of the concatenated communication device in response to the determined type of the reset command being a transmission module reset command; wherein
   the communication network comprises a plurality of concatenated communication devices;
   the plurality of concatenated communication devices are connected and communicate with each other through their respective transmission module to communicate with a base station; and
   the transmission module is configured to provide a transmission channel between the concatenated communication device and the base station or between concatenated communication devices.

An apparatus for resetting a concatenated communication device in a communication network includes:
a transmission module, configured to provide a transmission channel between the concatenated communication device and a base station, or between concatenated communication devices; and
a logical control module, configured to determine the type of a received reset command and reset modules in a concatenated communication device according to the determined type of the reset command; and
wherein the logical control module resets at least one module except for the transmission module in the concatenated communication device if the determined type of the reset command is a global reset command, and resets the transmission module in the concatenated communication device if the type of the reset command is a transmission reset command; wherein
the concatenated communication device is one of a plurality of concatenated communication devices comprised in the communication network;
the plurality of concatenated communication devices are connected and communicate with each other through their respective transmission module to communicate with a base station.

As can be seen from the above technical solutions, in the embodiments of the present invention, a logical control module is configured to determine the type of the reset command received. When receiving the global reset command, the logical control module outputs a global reset signal to reset the modules of the concatenated communication device except for the transmission module; when receiving the transmission module reset command, the logical control module outputs a transmission module reset signal to reset the transmission module in the concatenated communication device. In the method in accordance with the embodiments of the present invention, the reset of the transmission module in the concatenated communication device is controlled separately, and it is guaranteed that the reset of the concatenated communication device does not affect the normal operation of the concatenated communication devices on the downstream. Thus, the service ability of the whole system is guaranteed and the confidence of subscribers on the network is improved at the same time. In the method for resetting a concatenated communication device in accordance with the embodiments of the present invention, no additional hardware is needed. Thereby, the cost of the concatenated communication device is reduced and the reliability of the system is guaranteed. Moreover, the method is valid no matter that a cable interface or an optical fibre interface is adopted between a base station and a transmission module or between the transmission modules of the concatenated communication devices.

### Brief Description of the Drawings

Fig.1a shows a schematic diagram illustrating a chain networking architecture of a base station and RRUs according to the prior art.
Fig.1b shows a schematic diagram illustrating a tree networking architecture of the base station and the RRUs according to the prior art.
Fig.2 shows a schematic diagram of a circuit for resetting the RRU according to the related art.
Fig.3 shows a schematic diagram of the principle for resetting the RRU according to an embodiment of the present invention.
Fig. 4 shows a flow chart for resetting the RRU according to an embodiment of the present invention.

### Embodiments of the Invention

In embodiments of the present invention, a transmission module reset command is added in the concatenated communication device and the reset of the transmission module of the concatenated communication device is controlled separately through determining the type of the reset command of the concatenated communication device. The logical control module resets the modules of the concatenated communication device except for the transmission module after receiving a global reset command; or resets the transmission module in the concatenated communication device after receiving a transmission module reset command. The global reset command may be an external hard reset command and/or a soft reset command from the concatenated communication device.

The present invention is hereinafter described in detail with reference to accompanying drawings and preferred embodiments to further clarify the technical solution and advantages of the present invention.

An RRU is taken as an example in the following description.

Fig.3 shows a schematic diagram of the principle for resetting the RRU in accordance with an embodiment of the present invention. As shown in Fig.3, the RRU mainly includes the following modules:
a main control module, configured to control and administrate operation and status of the modules in the RRU. Specifically, the main control module controls the logical control module to output a global reset signal to reset the modules including the main control module itself except for the transmission module; or the main control module sends a transmission module reset command to the logical control module to control the logical control module to reset the transmission module in the RRU.

A radio frequency power amplifier module, configured to provide radio transmitting and receiving functions for the RRU. The reset of the radio frequency power amplifier module is under the control of the global reset signal outputted by the logical control module.

A transmission module, configured to provide a transmission channel between the RRU and the base station, or between the RRUs. Specifically, the transmission module is configured to transmit data, clock or other information. The reset of the transmission module is under the control of the transmission module reset signal outputted by the logical control module.

In order that the normal operation of the downstream RRU is not affected when the current RRU is reset, the following processing may be performed through an Electrically Programmable Logical Device (EPLD), a Complex Programmable Logical Device (CPLD), or a Field Programmable Gate Array (FPGA) chip in the transmission module.

In a downlink direction, i.e., the direction from an upstream RRU or base station to the downstream RRU, under normal conditions, the transmission module of the current RRU duplicates data received from the upstream RRU or base station, sends one copy of the data to the current RRU for process and sends another copy of the data to the downstream RRU for process.

In an uplink direction, i.e., the direction from the downstream RRU to the upstream RRU or base station, under normal conditions, the transmission module of the current RRU sends the data from the downstream RRU together with the data of the current RRU to the upstream RRU or base station after buffering and combining the data.

Thus, in case that the current RRU is reset, the communication link between the downstream RRU and the upstream RRU or base station is not affected and the downstream RRU may operate normally if only the transmission module of the current RRU is not affected.

It should be noted that, when the RRU is reset, operations, such as reset, loading of the EPLD, CPLD or FPGA, that affect the normal operation of the EPLD, CPLD or FPGA shall not be performed.

A logical control module, configured to determine the type of the reset command and generate different kinds of reset signals according to type of the reset command so as to control the reset of the modules in the RRU. Specifically, when receiving a hard reset command from an external reset button/switch or a soft reset command from the main control module, the logical control module outputs a global reset signal to reset the modules in the RRU except for the transmission module. For example, the logical control module outputs a global reset signal to the main control module and the radio frequency power amplifier module to control the resets of the main control module, the radio frequency power amplifier module, as well as the logical control module itself. The hard reset command from the external reset button/switch and the soft reset command from the main control module are referred to as a global reset command. When receiving a transmission module reset command from the main control module, the logical control module outputs a transmission module reset signal to the transmission module to reset the transmission module in the RRU.

The hard reset command may be given by a maintainer according to practical conditions. The soft reset command is generated by the main control module when the main control module detects any malfunction in the RRU. And the transmission module reset command is generated by the main control module when the main control module detects any malfunction in the transmission module. The method for generating a reset command belongs to the related art and will not be described herein. What is emphasized herein is that, the reset of the transmission module is controlled separately, thus it is guaranteed that the reset of the transmission module is performed in case that a malfunction occurs in the transmission module.

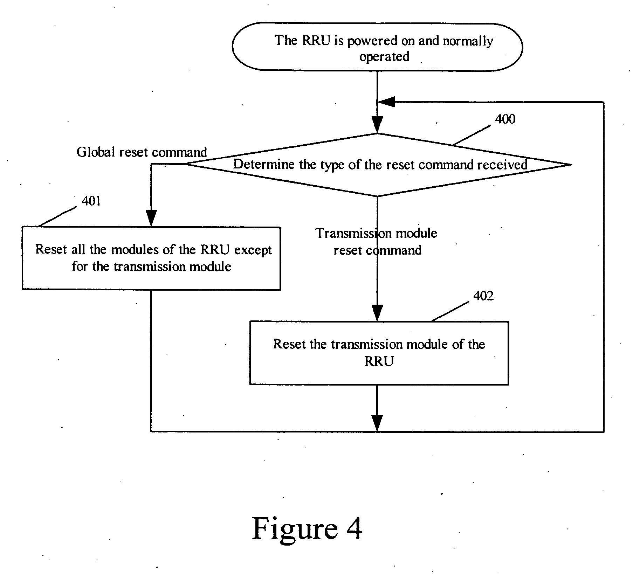

Fig. 4 shows a flow chart for resetting the RRU in accordance with an embodiment of the present invention. With reference to Fig.3 and Fig.4, the RRU1/base station, RRU2 and RRU3 construct a chain network and communicate through their respective transmission module. Supposing that the RRUs in the network are in normal operation, when the logical control module in a certain RRU receives a reset command, the method in accordance with an embodiment of the present invention includes:
Block 400: The logical control module determines the type of the reset command received, if the reset command received is a global reset command, proceed to block 401; if the reset command received is a transmission module reset command, proceed to block 402.

To differentiate the types of the reset commands, different imports of the logical control module may be configured to receive different types of reset commands. For example, import 0 corresponds to the hard reset command, import 1 corresponds to the soft reset command, and import 2 corresponds to the transmission module reset command from the main control module. In addition, the types of the reset commands may also be differentiated by software.

Although detecting different imports, the logical control module may determine the type of the reset command detected according to the port number.

The logical control module may be implemented by EPLD, CPLD or FPGA.

In block 400, the global reset command may include the hard reset command from the external reset button/switch and the soft reset command from the main control module. The transmission module reset command may be from the main control module. In the embodiment of the present invention, the logical control module detects in real time whether there is a reset command.

The reset of the transmission module in the RRU is controlled separately by differentiating the types of the reset commands in this step, and thus it is guaranteed that the transmission module can still keep normal communication even if other modules in the RRU are reset.

Block 401: The logical control module outputs a global reset signal to reset the modules in the RRU except for the transmission module, and then go back to block 401.

As can be seen from this block, the global reset signal is valid for the main control module, the radio frequency power amplifier module and the logical control module. The transmission module is still in normal operation and can provide normal communication. Thus, normal communication between the downstream RRU and the upstream RRU is guaranteed.

Block 402: The logical control module outputs a transmission module reset signal to reset the transmission module in the RRU, and then go back to block 400.

In blocks 401 and 402, the resets of different modules in the RRU may be controlled through setting different exports in the logical control module to output different reset commands. The number of the exports set in the logical control module may be one or more.

Although only the RRU is taken as the example in the above description, the method in accordance with the embodiments of the present invention is applicable not only to the RRU, but also to other concatenated communication devices, such as concatenated base stations.

The foregoing are only preferred embodiments of the present invention and are not for use in limiting the present invention, any modification, equivalent replacement or improvement made under the principles of the present invention is included in the protection scope of the present invention.

## Claims

1. A method of resetting a concatenated communication device in a communication network, comprising:
determining, by a logical control module in the concatenated communication device, the type of a reset command in response to receiving the reset command(400);
resetting, by the logical control module, modules in the concatenated communication device according to the determined type of the reset command;
**characterized in that,**
the resetting the modules comprises:
resetting the modules except for a transmission module in the concatenated communication device in response to the determined type of the reset command being a global reset command(401); and
resetting the transmission module in the concatenated communication device in response to the determined type of the reset command being a transmission module reset command(402); wherein
the communication network comprises a plurality of concatenated communication devices;
the plurality of concatenated communication devices are connected and communicate with each other through their respective transmission module to communicate with a base station; and
the transmission module is configured to provide a transmission channel between the concatenated communication device and the base station or between concatenated communication devices.

2. The method of claim 1, further comprising:
configuring different imports in the logical control module to receive different types of reset commands respectively; and
configuring different exports in the logical control module to output different types of reset signals for resetting modules in the concatenated communication device.

3. The method of claim 2, wherein the determining the type of the reset command(400) comprises:
determining the type of the reset command according to the import, wherein the reset command is received through the import.

4. The method of claim 2, wherein the resetting the modules except for the transmission module in the concatenated communication device(401) comprises:
generating, by the logical control module, a global reset signal and outputting the global reset signal via the export corresponding to the global reset signal; and
resetting, by the logical control module, according to the outputted global reset signal, the modules except for the transmission module in the concatenated communication device;

5. The method of claim 2, wherein the resetting the transmission module in the concatenated communication device(402) comprises:
generating, by the logical control module, a transmission module reset signal and outputting the transmission module reset signal via the export corresponding to the transmission module reset signal; and
resetting, by the logical control module, according to the outputted transmission module reset signal, the transmission module in the concatenated communication device.

6. The method of claim 1, wherein the global reset command comprises at least one of an external hard reset command and a soft reset command received from the concatenated communication device.

7. An apparatus for resetting a concatenated communication device in a communication network, comprising:
a transmission module, configured to provide a transmission channel between the concatenated communication device and a base station or between concatenated communication devices;
a logical control module, configured to determine the type of a received reset command and reset modules in a concatenated communication device according to the determined type of the reset command;
**characterized in that,**
the logical control module is configured to reset the modules except for the transmission module in the concatenated communication device if the determined type of the reset command is a global reset command, and reset the transmission module in the concatenated communication device if the type of the reset command is a transmission reset command; wherein
the concatenated communication device is one of a plurality of concatenated communication devices comprised in the communication network;
the plurality of concatenated communication devices are connected and communicate with each other through their respective transmission module to communicate with a base station.

8. The apparatus of claim 7, wherein the logical control module further comprises a module, configured to generate a global reset signal and output the global reset signal to reset the modules except for the transmission module in the concatenated communication device.

9. The apparatus of claim 7, wherein the logical control module further comprises a module, configured to generate a transmission module reset signal and output the transmission module reset signal to reset the transmission module in the concatenated communication device.

10. The apparatus of claim 7, wherein the global reset command comprises at least one of an external hard reset command and a soft reset command from a main control module of the concatenated communication device.

11. The apparatus of claim 7, wherein the logical control module is an Electrically Programmable Logic Device EPLD, or a Complex Programmable Logic Device CPLD or a Field Programmable Gate Array FPGA chip.

12. The apparatus of any one of claims 7 to 10, wherein the logical control module comprises one or more imports configured to receive different types of reset commands.

13. The apparatus of claim 8 or 9, wherein the logical control module comprises one or more exports for outputting different types of reset signals.

14. The apparatus of claim 7, wherein the concatenated communication device is a Radio Remote Unit RRU or a concatenated base station.

15. A communications system comprising a first Radio Remote Unit, RRU, in communication with a second RRU, or a base station, **characterized in that** the first RRU comprises:
a main control module, configured to control and administrate operation and status of the modules in the first RRU;
a radio frequency power amplifier module, configured to provide radio transmitting and receiving functions for the first RRU;
a transmission module, configured to provide a transmission channel between the first RRU and the base station, or between the first RRU and the second RRU;
a logical control module, configured to determine the type of a received reset command and reset modules in the first RRU according to the determined type of the reset command;
the logical control module is configured to reset the modules except for the transmission module in the first RRU if the determined type of the reset command is a global reset command, and reset the transmission module in the first RRU if the type of the reset command is a transmission reset command; wherein
the first RRU is one of a plurality of concatenated communication devices comprised in the communication network;
the plurality of concatenated communication devices are connected and communicate with each other through their respective transmission module to communicate with a base station.

## Patentansprüche

1. Verfahren zum Rücksetzen einer verketteten Kommunikationseinrichtung in einem Kommunikationsnetz, umfassend:
Bestimmen der Art eines Rücksetzbefehls durch ein Logiksteuermodul in der verketteten Kommunikationseinrichtung als Reaktion auf das Empfangen des Rücksetzbefehls (400);
Rücksetzen von Modulen in der verketteten Kommunikationseinrichtung durch das Logiksteuermodul gemäß der bestimmten Art des Rücksetzbefehls;
**dadurch gekennzeichnet, dass**
das Rücksetzen der Module Folgendes umfasst:
Rücksetzen der Module mit Ausnahme eines Übertragungsmoduls in der verketteten Kommunikationseinrichtung als Reaktion darauf, dass die bestimmte Art des Rücksetzbefehls ein globaler Rücksetzbefehl (401) ist; und
Rücksetzen des Übertragungsmoduls in der verketteten Kommunikationseinrichtung als Reaktion darauf, dass die bestimmte Art des Rücksetzbefehls ein Übertragungsmodulrücksetzbefehl (402) ist; wobei
das Kommunikationsnetz mehrere verkettete Kommunikationseinrichtungen umfasst;
die mehreren verketteten Kommunikationseinrichtungen miteinander durch ihr jeweiliges Übertragungsmodul verbunden sind und miteinander kommunizieren, um mit einer Basisstation zu kommunizieren; und
das Übertragungsmodul konfiguriert ist zum Bereitstellen eines Übertragungskanals zwischen der verketteten Kommunikationseinrichtung und der Basisstation oder zwischen verketteten Kommunikationseinrichtungen.

2. Verfahren nach Anspruch 1, weiterhin umfassend:
Konfigurieren von verschiedenen Importen in dem Logiksteuermodul zum jeweiligen Empfangen verschiedener Arten von Rücksetzbefehlen; und
Konfigurieren von verschiedenen Exporten in dem Logiksteuermodul zum Ausgeben verschiedener Arten von Rücksetzsignalen zum Rücksetzen von Modulen in der verketteten Kommunikationseinrichtung.

3. Verfahren nach Anspruch 2, wobei das Bestimmen der Art des Rücksetzbefehls (400) Folgendes umfasst:
Bestimmen der Art des Rücksetzbefehls gemäß dem Import, wobei der Rücksetzbefehl durch den Import empfangen wird.

4. Verfahren nach Anspruch 2, wobei das Rücksetzen der Module mit Ausnahme des Übertragungsmoduls in der verketteten Kommunikationseinrichtung (401) Folgendes umfasst:
Generieren eines globalen Rücksetzsignals durch das Logiksteuermodul und Ausgeben des globalen Rücksetzsignals über den dem globalen Rücksetzsignal entsprechenden Export; und
Rücksetzen der Module mit Ausnahme des Übertragungsmoduls in der verketteten Kommunikationseinrichtung durch das Logiksteuermodul gemäß dem ausgegebenen globalen Rücksetzsignal.

5. Verfahren nach Anspruch 2, wobei das Rücksetzen des Übertragungsmoduls in der verketteten Kommunikationseinrichtung (402) Folgendes umfasst:
Generieren eines Übertragungsmodulrücksetzsignals durch das Logiksteuermodul und Ausgeben des Übertragungsmodulrücksetzsignals über den Export entsprechend dem Übertragungsmodulrücksetzsignal; und
Rücksetzen des Übertragungsmoduls in der verketteten Kommunikationseinrichtung durch das Logiksteuermodul gemäß dem ausgegebenen Übertragungsmodulrücksetzsignal.

6. Verfahren nach Anspruch 1, wobei der globale Rücksetzbefehl mindestens einen externen harten Rücksetzbefehl und/oder einen weichen Rücksetzbefehl, von der verketteten Kommunikationseinrichtung empfangen, umfasst.

7. Vorrichtung zum Rücksetzen einer verketteten Kommunikationseinrichtung in einem Kommunikationsnetz, umfassend:
ein Übertragungsmodul, das konfiguriert ist zum Bereitstellen eines Übertragungskanals zwischen der verketteten Kommunikationseinrichtung und einer Basisstation oder zwischen verketteten Kommunikationseinrichtungen;
ein Logiksteuermodul, das konfiguriert ist zum Bestimmen der Art eines empfangenen Rücksetzbefehls und von Rücksetzmodulen in einer verketteten Kommunikationseinrichtung gemäß der bestimmten Art des Rücksetzbefehls;
**dadurch gekennzeichnet, dass**
das Logiksteuermodul konfiguriert ist zum Rücksetzen der Module mit Ausnahme des Übertragungsmoduls in der verketteten Kommunikationseinrichtung, falls die bestimmte Art des Rücksetzbefehls ein globaler Rücksetzbefehl ist, und zum Rücksetzen des Übertragungsmoduls in der verketteten Kommunikationseinrichtung, falls die Art des Rücksetzbefehls ein Übertragungsrücksetzbefehl ist; wobei
die verkettete Kommunikationseinrichtung eine von mehreren verketteten Kommunikationseinrichtungen ist, die in dem Kommunikationsnetz enthalten sind;
die mehreren verketteten Kommunikationseinrichtungen miteinander durch ihr jeweiliges Übertragungsmodul verbunden sind und miteinander kommunizieren, um mit einer Basisstation zu kommunizieren.

8. Vorrichtung nach Anspruch 7, wobei das Logiksteuermodul weiterhin ein Modul umfasst, das konfiguriert ist zum Generieren eines globalen Rücksetzsignals und Ausgeben des globalen Rücksetzsignals zum Rücksetzen der Module mit Ausnahme des Übertragungsmoduls in der verketteten Kommunikationseinrichtung.

9. Vorrichtung nach Anspruch 7, wobei das Logiksteuermodul weiterhin ein Modul umfasst, das konfiguriert ist zum Generieren eines Übertragungsmodulrücksetzsignals und Ausgeben des Übertragungsmodulrücksetzsignals zum Rücksetzen des Übertragungsmoduls in der verketteten Kommunikationseinrichtung.

10. Vorrichtung nach Anspruch 7, wobei der globale Rücksetzbefehl mindestens einen externen harten Rücksetzbefehl und/oder einen weichen Rücksetzbefehl von einem Hauptsteuermodul der verketteten Kommunikationseinrichtung umfasst.

11. Vorrichtung nach Anspruch 7, wobei das Logiksteuermodul ein EPLD (Electrically Programmable Logic Device) oder ein CPLD (Complex Programmable Logic Device) oder ein FPGA-Chip (Field Programmable Gate Array) ist.

12. Vorrichtung nach einem der Ansprüche 7 bis 10, wobei das Logiksteuermodul einen oder mehrere Importe umfasst, die konfiguriert sind zum Empfangen von verschiedenen Arten von Rücksetzbefehlen.

13. Vorrichtung nach Anspruch 8 oder 9, wobei das Logiksteuermodul einen oder mehrere Exporte zum Ausgeben verschiedener Arten von Rücksetzsignalen umfasst.

14. Vorrichtung nach Anspruch 7, wobei die verkettete Kommunikationseinrichtung eine RRU (Radio Remote Unit) oder eine verkettete Basisstation ist.

15. Kommunikationssystem, umfassend eine erste RRU (Radio Remote Unit) in Kommunikation mit einer zweiten RRU oder einer Basisstation, **dadurch gekennzeichnet, dass** die erste RRU Folgendes umfasst:
ein Hauptsteuermodul, das konfiguriert ist zum Steuern und Verwalten des Betriebs und des Status der Module in der ersten RRU;
ein Hochfrequenzleistungsverstärkermodul, das konfiguriert ist zum Bereitstellen von Funkübertragungs- und -empfangsfunktionen für die erste RRU;
ein Übertragungsmodul, das konfiguriert ist zum Bereitstellen eines Übertragungskanals zwischen der ersten RRU und der Basisstation oder zwischen der ersten RRU und der zweiten RRU;
ein Logiksteuermodul, das konfiguriert ist zum Bestimmen der Art eines empfangenen Rücksetzbefehls und von Rücksetzmodulen in der ersten RRU gemäß der bestimmten Art des Rücksetzbefehls;
wobei das Logiksteuermodul konfiguriert ist zum Rücksetzen der Module mit Ausnahme des Übertragungsmoduls in der ersten RRU, falls die bestimmte Art des Rücksetzbefehls ein globaler Rücksetzbefehl ist, und zum Rücksetzen des Übertragungsmoduls in der ersten RRU, falls die Art des Rücksetzbefehls ein Übertragungsrücksetzbefehl ist; wobei
die erste RRU eine von mehreren verketteten Kommunikationseinrichtungen ist, die in dem Kommunikationsnetz enthalten sind;
die mehreren verketteten Kommunikationseinrichtungen miteinander durch ihr jeweiliges Übertragungsmodul verbunden sind und miteinander kommunizieren, um mit einer Basisstation zu kommunizieren.

## Revendications

1. Procédé de réinitialisation d'un dispositif de communication concaténé dans un réseau de communication, comprenant :
la détermination, par un module de commande logique dans le dispositif de communication concaténé, du type d'une commande de réinitialisation en réponse à la réception de la commande de réinitialisation (400) ;
la réinitialisation, par le module de commande logique, de modules dans le dispositif de communication concaténé en fonction du type déterminé de commande de réinitialisation ;
**caractérisé en ce que,**
la réinitialisation des modules comprend :
la réinitialisation des modules à l'exception d'un module de transmission dans le dispositif de communication concaténé en réponse à la détermination que le type de la commande de réinitialisation est une commande de réinitialisation globale (401) ; et
la réinitialisation du module de transmission dans le dispositif de communication concaténé en réponse à la détermination que le type de la commande de réinitialisation est une commande de réinitialisation de module de transmission (402) ; dans lequel
le réseau de communication comprend une pluralité de dispositifs de communication concaténés ;
les dispositifs de communication de la pluralité de dispositifs de communication concaténés sont connectés les uns aux autres et communiquent les uns avec les autres par le biais de leur module de transmission respectif afin de communiquer avec une station de base ; et
le module de transmission est configuré pour fournir un canal de transmission entre le dispositif de communication concaténé et la station de base ou entre les dispositifs de communication concaténés.

2. Procédé selon la revendication 1, comprenant en outre :
la configuration de différentes importations dans le module de commande logique afin de recevoir différentes types de commandes de réinitialisation respectivement ; et
la configuration de différentes exportations dans le module de commande logique afin de produire en sortie différents types de signaux de réinitialisation pour réinitialiser des modules dans le dispositif de communication concaténé.

3. Procédé selon la revendication 2, dans lequel la détermination du type de la commande de réinitialisation (400) comprend :
la détermination du type de commande de réinitialisation en fonction de l'importation, la commande de réinitialisation étant reçue par le biais de l'importation.

4. Procédé selon la revendication 2, dans lequel la réinitialisation des modules à l'exception du module de transmission dans le dispositif de communication concaténé (401) comprend :
la génération, par le module de commande logique, d'un signal de réinitialisation globale et la production en sortie du signal de réinitialisation globale par le biais de l'exportation correspondant au signal de réinitialisation globale ; et
la réinitialisation, par le module de commande logique, en fonction du signal de réinitialisation globale produit en sortie, des modules à l'exception du module de transmission dans le dispositif de communication concaténé.

5. Procédé selon la revendication 2, dans lequel la réinitialisation du module de transmission dans le dispositif de communication concaténé (402) comprend :
la génération, par le module de commande logique, d'un signal de réinitialisation de module de transmission et la production en sortie d'un signal de réinitialisation de module de transmission par le biais de l'exportation correspondant au signal de réinitialisation de module de transmission ; et
la réinitialisation, par le module de commande logique, en fonction du signal de réinitialisation de module de transmission produit en sortie, du module de transmission dans le dispositif de communication concaténé.

6. Procédé selon la revendication 1, dans lequel la commande de réinitialisation globale comprend une commande de réinitialisation à froid externe et/ou une commande de réinitialisation à chaud reçue depuis le dispositif de communication concaténé.

7. Appareil de réinitialisation d'un dispositif de communication concaténé dans un réseau de communication, comprenant :
un module de transmission, configuré pour fournir un canal de transmission entre le dispositif de communication concaténé et une station de base ou entre des dispositifs de communication concaténés ;
un module de commande logique, configuré pour déterminer le type d'une commande de réinitialisation reçue et réinitialiser des modules dans un dispositif de communication concaténé en fonction du type déterminé de commande de réinitialisation ;
**caractérisé en ce que,**
le module de commande logique est configuré pour réinitialiser les modules à l'exception du module de transmission dans le dispositif de communication concaténé s'il est déterminé que le type de la commande de réinitialisation est une commande de réinitialisation globale, et réinitialiser le module de transmission dans le dispositif de communication concaténé si le type de la commande de réinitialisation est une commande de réinitialisation de transmission ; dans lequel
le dispositif de communication concaténé est l'un parmi une pluralité de dispositifs de communication concaténés compris dans le réseau de communication ;
les dispositifs de communication de la pluralité de dispositifs de communication concaténés sont connectés les uns aux autres et communiquent les uns avec les autres par le biais de leur module de transmission respectif afin de communiquer avec une station de base.

8. Appareil selon la revendication 7, dans lequel le module de commande logique comprend en outre un module configuré pour générer un signal de réinitialisation globale et produire en sortie le signal de réinitialisation globale pour réinitialiser les modules à l'exception du module de transmission dans le dispositif de communication concaténé.

9. Appareil selon la revendication 7, dans lequel le module de commande logique comprend en outre un module pour générer un signal de réinitialisation de module de transmission et produire le sortie un signal de réinitialisation de module de transmission pour réinitialiser le module de transmission dans le dispositif de communication concaténé.

10. Appareil selon la revendication 7, dans lequel la commande de réinitialisation globale comprend une commande de réinitialisation à froid externe et/ou une commande de réinitialisation à chaud reçue depuis un module de commande principal du dispositif de communication concaténé.

11. Appareil selon la revendication 7, dans lequel le module de commande logique est un Dispositif Logique Programmable Electriquement, EPLD, ou un Dispositif Logique Programmable Complexe, CPLD ou une puce à Réseau Prédiffusé Programmable par l'Utilisateur, FPGA.

12. Appareil selon l'une quelconque des revendications 7 à 10, dans lequel le module de commande logique comprend une ou plusieurs importations configurées pour recevoir différents types de commandes de réinitialisation.

13. Appareil selon la revendication 8 ou 9, dans lequel le module de commande logique comprend une ou plusieurs exportations pour produire en sortie différents types de signaux de réinitialisation.

14. Appareil selon la revendication 7, dans lequel le dispositif de communication concaténé est une Unité Radio Distante, RRU ou une station de base concaténée.

15. Système de communication comprenant une première Unité Radio Distante, RRU, en communication avec une seconde RRU, ou une station de base, **caractérisé en ce que** la première RRU comprend:
un module de commande principal, configuré pour commander et administrer le fonctionnement et l'état des modules dans la première RRU ;
un module d'amplificateur de puissance à fréquences radioélectriques, configuré pour assurer des fonctions d'émission et de réception radio de la première RRU ;
un module de transmission, configuré pour fournir un canal de transmission entre la première RRU et la station de base, ou entre la première RRU et la seconde RRU ;
un module de commande logique, configuré pour déterminer le type d'une commande de réinitialisation reçue et réinitialiser des modules dans la première RRU en fonction du type déterminé de la commande de réinitialisation ;
le module de commande logique est configuré pour réinitialiser les modules à l'exception du module de transmission dans la première RRU s'il est déterminé que le type de la commande de réinitialisation est une commande de réinitialisation globale,
et réinitialiser le module de transmission dans la première RRU si le type de la commande de réinitialisation est une commande de réinitialisation de transmission; dans lequel
la première RRU est l'une parmi une pluralité de dispositifs de communication concaténés compris dans le réseau de communication ;
les dispositifs de communication de la pluralité de dispositifs de communication concaténés sont connectés les uns aux autres et communiquent les uns avec les autres par le biais de leur module de transmission respectif afin de communiquer avec une station de base.
